# EUROPÄISCHE PATENTSCHRIFT

(11) **EP 3 453 297 B1**
(45) Veröffentlichungstag und Bekanntmachung des Hinweises auf die Patenterteilung: **05.03.2025**
(21) Anmeldenummer: 18187433.0
(22) Anmeldetag: 06.08.2018
(51) Int. Cl.: A47L 9/00, A47L 9/28

(54) **STEUERUNGSEINHEIT UND VERFAHREN ZUR ANSTEUERUNG EINER LEISTUNGSZWISCHENSTUFE FÜR EINEN STAUBSAUGER**
CONTROL UNIT AND METHOD FOR CONTROLLING AN INTERMEDIATE POWER STAGE FOR A VACUUM CLEANER
UNITÉ DE COMMANDE ET PROCÉDÉ DE COMMANDE D'UN ÉTAGE INTERMÉDIAIRE DE PUISSANCE POUR UN ASPIRATEUR

(30) Priorität: 07.09.2017 DE 102017120580
(43) Veröffentlichungstag der Anmeldung: 13.03.2019
(73) Patentinhaber: Miele & Cie. KG, 33332 Gütersloh (DE)
(72) Erfinder: Braun, Otto, 33739 Bielefeld (DE)

(56) Entgegenhaltungen:
- EP-A1- 0 370 610
- EP-A1- 2 842 471

## Beschreibung

Der hier vorgestellte Ansatz betrifft eine Steuerungseinheit zur Ansteuerung einer Leistungszwischenstufe für einen Staubsauger gemäß den Hauptansprüchen.

Staubsauger mit einer Anzeige für feste Leistungsstufen sind typischerweise nicht in der Lage, die Leistung des Geräts kontinuierlich zu verstellen. Diesen Nachteil haben besonders Steuerungen mit einer plus-minus-Taste, da diese hinsichtlich ihrer Handhabung nur zwischen den festgelegten Leistungsstufen schalten. Dieser Mangel hat zur Folge, dass der Kunde beim Saugen eine Leistung zwischen zwei Stufen nicht anwählen kann. Dies trifft besonders bei Leistungseinstellungen auf, die dazu dienen die Schiebekräfte auf ein passendes Maß zu bringen und gleichzeitig die Saugleistung zur Reinigung nicht zu sehr zu verlieren, Da die meisten Steuerungen maximal 6-7 Stufen haben, muss mit einem Kompromiss gelebt werden.

Es existiert eine alternative Lösung mit einer Drehpotisteuerung, die per beleuchteter Anzeige die vollen Stufen kennzeichnet. Die Leistungsbereiche zwischen den Stufen sind dabei weiterhin anwählbar. Eine Drehpotisteuerung mit festen Stufen ist der nächstkommende Stand der Technik. Dazu sind diese Einstellmöglichkeiten für die Temperatur bei Kühl- und Gefrierschränken Stand der Technik. Dort können durch anhaltendes Drücken der Taste Zwischenstufen eingestellt werden.

Aus der EP 0 370 610 A1 ist eine Steuerungseinheit zur Ansteuerung von Leistungsstufen bei Staubsaugern bekannt, wobei die Steuerungseinheit dazu ausgebildet ist, ein Betätigungssignal über eine Betätigungsdauer eines Tastenelementes einzulesen und beim Erkennen einer Betätigungsdauer des Tastenelements, die kürzer als eine festgelegte Haltezeit ausfällt, eine Leistungsstufe um einen vordefinierten Wert zu erhöhen oder zu verringern.

Von diesem Stand der Technik ausgehend ist es die Aufgabe des hier vorgestellten Ansatzes, eine verbesserte Steuerungseinheit zur Ansteuerung einer Leistungszwischenstufe für einen Staubsauger zu schaffen.

Diese Aufgabe wird durch eine Steuerungseinheit zur Ansteuerung einer Leistungszwischenstufe für einen Staubsauger mit den Merkmalen der Hauptansprüche gelöst. Vorteilhafte Ausgestaltungen und Weiterbildungen der Erfindung ergeben sich aus den nachfolgenden Unteransprüchen.

Die mit dem hier vorgestellten Ansatz einhergehenden Vorteile bestehen darin, dass sich das Gerät trotz festgelegter, hinterlegter Leistungsstufen gleichzeitig kontinuierlich verstellen lässt. Ein Kunde kann somit die Staubsaugerleistung individuell auf seine Anwendung passend einstellen und dadurch einen passenden Kompromiss zwischen Schiebkraft und Reinigungsleistung finden, ohne an die vorgegebenen Leistungsstufen des Staubsaugers gebunden zu sein.

Es wird eine Steuerungseinheit zur Ansteuerung einer Leistungszwischenstufe für einen Staubsauger vorgestellt, wobei die Steuerungseinheit ausgebildet ist ein Betätigungssignal über eine Betätigungsdauer eines Tastenelements einzulesen.

Bei einer Steuerungseinheit kann es sich um einen technischen Bestandteil eines Staubsaugers handeln, der für das Steuern einer Saugleistung des Staubsaugers notwendig ist. Bei einer Leistungsstufe kann es sich um eine Stufe der Saugleistungsabgabe handeln, wobei eine höhere Saugstufe einer höheren Saugleistung entspricht. Bei einem Staubsauger kann es sich um ein elektrisches Reinigungsgerät handeln, mit dem Staub und/oder Schmutz abgesaugt wird. Bei einem Betätigungssignal kann es sich um ein Signal handeln, dass eine Information über eine Betätigungsdauer eines Tastenelements eines Staubsaugers repräsentiert. Bei einer Betätigungsdauer kann es sich um eine Zeitspanne handeln, in der ein Tastenelement eines Staubsaugers betätigt wird, um eine Funktion des Staubsaugers zu aktivieren. Bei einem Tastenelement kann es sich um einen flachen Knopf an einem Staubsauger handeln, der betätigt wird, um Daten einzugeben oder eine Funktion auszulösen Gemäß einer Ausführungsform kann die Steuerungseinheit ausgebildet ist beim Erkennen einer Betätigungsdauer des Tastenelements, die kürzer als eine festgelegte Haltezeit ausfällt, eine Leistungsstufe um einen vordefinierten Wert zu erhöhen oder zu verringern. Eine solche Ausführungsform des hier vorgestellten Ansatzes bietet den Vorteil, einem Benutzer zu signalisieren, dass die Betätigung des Tastenelements eine Aktion des Staubsaugers bewirkt.

Gemäß einer Ausführungsform kann die festgelegte Haltezeit des Tastenelements eine Sekunde entsprechen. Eine solche Ausführungsform des hier vorgeschlagenen Ansatzes bietet den Vorteil, dass eine solche Haltezeit innerhalb eines gewohnten Zeitrahmens für die Betätigung eines Tastenelements liegt, die der Benutzer erwartet, damit der Staubsauger auf die Benutzungeingabe über das Tastenelement reagiert.

Gemäß einer Ausführungsform kann die Steuerungseinheit ausgebildet sein, beim Erkennen der Betätigungsdauer des Tastenelements, die länger als eine weitere Haltezeit ausfällt, eine Leistungsstufe in einem Bereich zwischen zwei vordefinierten Werten einzustellen. Eine solche Ausführungsform des hier vorgeschlagenen Ansatzes bietet den Vorteil, dass als zusätzliche erweiterte Funktionsoption die Leistung auch in einem Bereich zwischen zwei vordefinierten Werten eingestellt werden kann. Dies ermöglicht eine präzisere und feinere Einstellung des gewünschten Saugverhaltens des Staubsaugers.

Gemäß einer Ausführungsform kann eine weitere Haltezeit länger als eine Sekunde, insbesondere aber kürzer als zweieinhalb Sekunden andauern.

Gemäß einer Ausführungsform kann die Steuerungseinheit ausgebildet sein, beim Erkennen der Betätigungsdauer des Tastenelements, die länger als eine zusätzliche Haltezeit andauert, eine Leistungsstufe erneut um einen vordefinierten Wert zu erhöhen oder zu verringern. Eine solche Ausführungsform bietet den Vorteil, einem Benutzer, der über diese Zusatzoption des Staubsaugers Bescheid weiß, diese Option auch zur Verfügung zu stellen, wobei eine Grundfunktionalität bei der stufenweisen Erhöhung oder Erniedrigung der Leistungsstufen noch immer möglich ist, sodass auch ein über diese Zusatzoption nicht kundiger Benutzer den Staubsauger (mit der eingeschränkten Funktionalität) dennoch benutzen kann.

Gemäß einer Ausführungsform kann eine zusätzliche Haltezeit länger als zweieinhalb Sekunden andauern. Eine solche Ausführungsform bietet den Vorteil, eine unnötige Wartezeit bei der Einstellung der gewünschten (Zwischen-) Leistungsstufe zu vermeiden.

Gemäß einer Ausführungsform kann die Steuerungseinheit ausgebildet sein, die Staubsaugerleistung auf eine der Betätigungsdauer entsprechende Leistung kontinuierlich zu erhöhen oder zu verringern. Eine solche Ausführungsform des hier vorgeschlagenen Ansatzes bietet den Vorteil, dass ein Benutzer die gewünschte Saugleistung entsprechend intuitiv eingeben kann.

Gemäß einer Ausführungsform kann die Steuerungseinheit ausgebildet sein, einen zuletzt eingestellten Leistungswert einer Leistungsstufe zu speichern. Eine solche Ausführungsform des hier vorgeschlagenen Ansatzes erhöht den Beginn Komfort, da oftmals gleichen Bodenbelägen in einer Wohnung die vom Staubsauger verwendete Saugleistung meist gleich oder zumindest sehr ähnlich bleiben kann.

Es wird ein Verfahren zur Ansteuerung einer Leistungszwischenstufe einer Steuerungseinheit für einen Staubsauger vorgestellt, wobei das Verfahren einen Schritt des Änderns der Leistungsstufe in Abhängigkeit einer eingelesenen Betätigungsdauer des Tastenelements umfasst.

Auch wenn der beschriebene Ansatz anhand eines Haushaltgerät beschrieben wird, kann die hier beschriebene Steuerungseinheit sowie das Verfahren zur Ansteuerung einer Leistungszwischenstufe für einen Staubsauger entsprechend im Zusammenhang mit einem gewerblichen oder professionellen Gerät, eingesetzt werden.

Ein Ausführungsbeispiel der Erfindung ist in den Zeichnungen rein schematisch dargestellt und wird nachfolgend näher beschrieben. Es zeigt
- Figur 1: einen Staubsauger mit Steuerungseinheit zur Ansteuerung einer Leistungszwischenstufe gemäß einem Ausführungsbeispiel;
- Figur 2: ein Leistungsdiagramm einer Ansteuerung einer Leistungszwischenstufe für einen Staubsauger gemäß einem Ausführungsbeispiel; und
- Figur 3: ein Ablaufdiagramm eines Ausführungsbeispiels eines Verfahrens zur Ansteuerung einer Leistungszwischenstufe gemäß einem Ausführungsbeispiel.

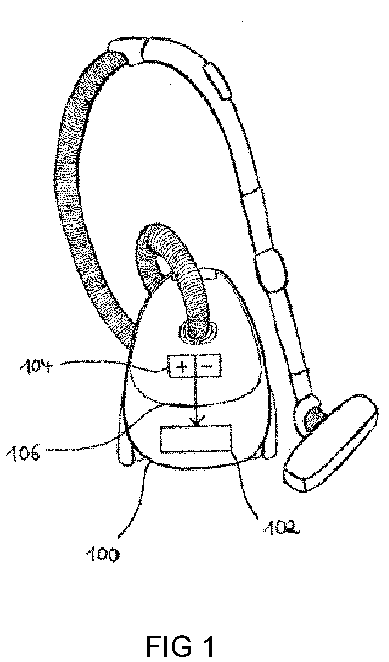

Figur 1 zeigt einen Staubsauger 100 mit Steuerungseinheit 102 zur Ansteuerung einer Leistungszwischenstufe gemäß einem Ausführungsbeispiel. Der Staubsauger 100 umfasst eine Steuerungseinheit 102 sowie ein Tastenelement 104. Die Steuerungseinheit 102 ist ausgebildet, um ein Betätigungssignal 106 eines Tastenelements 104 einzulesen, wobei das Betätigungssignal 106 eine Information zu einer Betätigungsdauer des Tastenelements 104 repräsentiert. Die Steuerungseinheit 102 ist ferner ausgebildet, die Staubsaugerleistung auf einer der Betätigungsdauer entsprechende Leistung kontinuierlich zu erhöhen oder zu verringern.

Das Tastenelement 104 soll zur Umschaltung zwischen den Leistungsstufen zusätzlich mit einer Erkennung für einen langanhaltenden Druck erweitert werden, so dass die Leistung nach dem Schaltpunkt zunächst um eine Leistungsstufe geändert wird, damit nicht der Eindruck entsteht, der Staubsauger 100 reagiere nicht. Wenn das Tastenelement 104 weiter gedrückt bleibt, soll die Leistung anstelle in Sprüngen von Stufe zu Stufe nun kontinuierlich bzw. stufenlos verstellt werden. Somit wird ermöglicht, dass jede beliebige Leitung eingestellt werden kann. Diese Leistungseinstellung wird gespeichert und steht nach dem Neustart des Staubsaugers 100 dem Kunden wieder zur Verfügung.

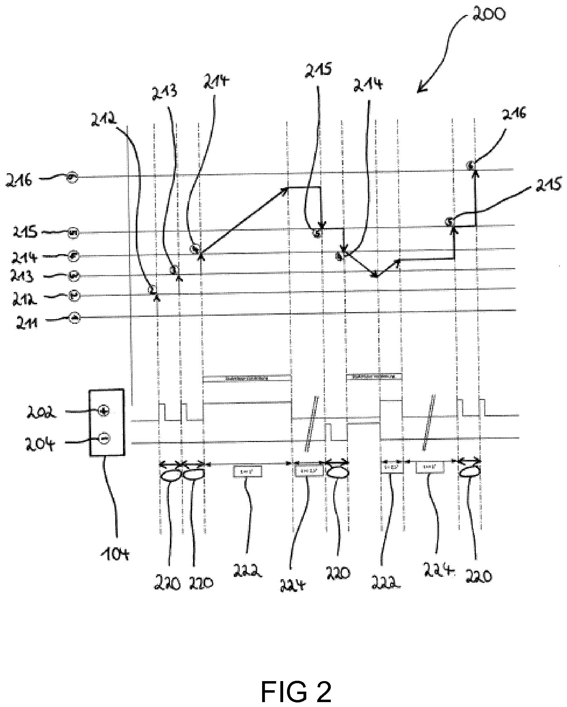

Figur 2 zeigt ein Leistungsdiagramm 200 einer Ansteuerung einer Leistungszwischenstufe für einen Staubsauger gemäß einem Ausführungsbeispiel. Das Leistungsdiagramm 200 stellt die Funktionsweise der Ansteuerung einer Leistungszwischenstufe eines Staubsaugers dar, wobei der Staubsauger gemäß einem Ausführungsbeispiel über 6 Leistungsstufen 211, 212, 213, 214, 215, 216 sowie ein Tastenelement 104 verfügt, dass gemäß einer Ausführungsform eine Plus-Taste 202 zur Erhöhung einer Leistungsstufe 211, 212, 213, 214, 215, 216 und eine Minus-Taste 204 zur Verringerung einer Leistungsstufe 211, 212, 213, 214, 215, 216 des Staubsaugers umfasst. Die Plus-Taste 202 des Tastenelements ist in dem Leistungsdiagramm 200 als ein + gekennzeichnet und die Minus-Taste 204 ist in dem Leistungsdiagramm 200 als ein - gekennzeichnet.

Die Steuerungseinheit des Staubsaugers erkennt zunächst eine Betätigungsdauer des Tastenelements 104, die kürzer als eine festgelegte Haltezeit 220 ausfällt. Die festgelegte Haltezeit 220 des Tastenelements 104 entspricht hierbei maximal 1 Sekunde. Somit wird eine Leistungsstufe 211, 212, 213, 214, 215, 216 um einen vordefinierten Wert erhöht oder verringert. In dem Leistungsdiagramm 200 wird nach dem Start des Staubsaugers eine Leistungsstufe 1 211 erreicht und die Leistungsstufe 1 211 sobald um einen vordefinierten Wert, wobei es sich bei dem vordefinierten Wert um + 1 handelt, auf einen Leistungswert 2 212 erhöht, danach um den vordefinierten Wert auf einen Leistungswert 3 213 erhöht und schließlich um den vordefinierten Wert + 1 auf einen Leistungswert 4 214 erhöht.

Nach der Erhöhung der Saugleistung auf den Leistungswert 4 214 erkennt die Steuerungseinheit des Staubsaugers eine Betätigungsdauer des Tastenelements 104, die länger als eine weitere Haltezeit 222 ausfällt, um eine nicht definierte Leistungsstufe in einem Bereich zwischen zwei vordefinierten Leistungswerten 211, 212, 213, 214, 215, 216 einzustellen. Die weitere Haltezeit 222 entspricht hierbei mindestens 1 Sekunde, aber maximal 2,5 Sekunden. Wie im Leistungsdiagramm 200 gezeigt, wird das Tastenelement 104 für eine Dauer länger als eine Sekunde, aber kürzer als 2,5 Sekunden betätigt, um eine stufenlose Verstellung der Staubsaugerleistung zu erreichen. Der Leistungswert "springt" hierbei von 4 214 auf einen Leistungswert von 5,7.

Die Steuerungseinheit ist ausgebildet, beim Erkennen einer Betätigungsdauer des Tastenelements 104, die länger als eine zusätzliche Haltezeit 224 andauert, eine Leistungsstufe 211, 212, 213, 214, 215, 216 erneut um einen vordefinierten Wert zu erhöhen oder zu verringern. Die zusätzliche Haltezeit 224 entspricht hierbei länger als 2,5 Sekunden. Wie im Leistungsdiagramm 200 gezeigt, wird das Tastenelement 104 nun für eine Dauer länger als 2,5 Sekunden betätigt, um eine Leistungsstufe 211, 212, 213, 214, 215, 216 erneut um einen vordefinierten Wert zu erhöhen oder zu verringern. Der Leistungswert verringert sich hierbei von 5,7 zunächst auf einen Wert von 5 215. Bei einer erneuten Betätigung des Tastenelements 104 wird der Wert von 5 215 um den vordefinierten Wert - 1 auf den Leistungswert 4 214 verringert.

Wie im Leistungsdiagramm 200 gezeigt, wird das Tastenelement 104, um zurück zu einer nicht definierten Leistungszwischenstufe zu gelangen, erneut für eine Dauer länger als eine Sekunde, aber kürzer als 2,5 Sekunden betätigt, um eine stufenlose Verstellung der Staubsaugerleistung zu erreichen. Der Leistungswert "springt" bzw. verringert sich hierbei von 4 214 auf einen Leistungswert von 2,8. Daran anschließend wird das Tastenelement 104 für eine Dauer länger als eine Sekunde, aber kürzer als 2,5 Sekunden betätigt, um eine stufenlose Verstellung der Staubsaugerleistung zu erreichen. Der Leistungswert "springt" bzw. erhöht sich hierbei von 2,8 auf einen Leistungswert von 3,5.

Schließlich wird, wie im Leistungsdiagramm 200 gezeigt, das Tastenelement 104 nun für eine Dauer länger als 2,5 Sekunden betätigt, um eine Leistungsstufe 211, 212, 213, 214, 215, 216 erneut um einen vordefinierten Wert zu erhöhen oder zu verringern. Der Leistungswert erhöht sich hierbei von 3,5 zunächst auf den Leistungswert 5 215. Bei einer erneuten Betätigung des Tastenelements 104 wird der Wert von 5215 um den vordefinierten Wert + 1 auf 6 216 erhöht.

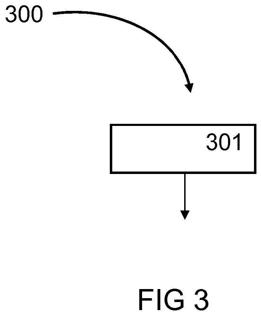

Figur 3 zeigt ein Ablaufdiagramm eines Ausführungsbeispiels eines Verfahrens 300 zur Ansteuerung einer Leistungszwischenstufe gemäß einem Ausführungsbeispiel. Das Verfahren 300 zur Ansteuerung einer Leistungszwischenstufe einer Steuerungseinheit für einen Staubsauger kann beispielsweise unter Verwendung der anhand von Figur 1 beschriebenen Steuerungseinheit ausgeführt werden.

In einem Schritt 301 wird die Leistungsstufe in Abhängigkeit einer eingelesenen Betätigungsdauer des Tastenelements geändert.

## Patentansprüche

1. Steuerungseinheit (102) zur Ansteuerung einer Leistungszwischenstufe eines Staubsaugers (100), wobei die Steuerungseinheit (102) ausgebildet ist ein Betätigungssignal (106) über eine Betätigungsdauer eines Tastenelements (104) einzulesen, wobei die Steuerungseinheit (102) ausgebildet ist beim Erkennen einer Betätigungsdauer des Tastenelements (104), die kürzer als eine festgelegte Haltezeit (220) ausfällt, eine Leistungsstufe (211, 212, 213, 214, 215, 216) um einen vordefinierten Wert zu erhöhen oder zu verringern,
**dadurch gekennzeichnet,**
**dass** die Steuerungseinheit (102) ausgebildet ist beim Erkennen der Betätigungsdauer des Tastenelements (104), die länger als eine weitere Haltezeit (222) ausfällt, eine Leistungsstufe in einem Bereich zwischen zwei vordefinierten Werten einzustellen, wobei die Steuerungseinheit (102) ausgebildet ist, beim Erkennen der Betätigungsdauer des Tastenelements (104), die länger als eine zusätzliche Haltezeit (224) ausfällt, eine Leistungsstufe (211, 212, 213, 214, 215, 216) um einen vordefinierten Wert zu erhöhen oder zu verringern.

2. Steuerungseinheit (102) gemäß Anspruch 1, wobei die festgelegte Haltezeit (220) des Tastenelements (104) einer Sekunde entspricht.

3. Steuerungseinheit (102) gemäß Anspruch 1, wobei die weitere Haltezeit (222) länger als eine Sekunde, insbesondere aber kürzer als zweieinhalb Sekunden andauert.

4. Steuerungseinheit (102) gemäß Anspruch 1, wobei die zusätzliche Haltezeit (224) länger als zweieinhalb Sekunden andauert.

5. Steuerungseinheit (102) gemäß einem er vorangegangen Ansprüche, wobei die Steuerungseinheit (102) ausgebildet ist, die Staubsaugerleistung auf eine der Betätigungsdauer entsprechende Leistung kontinuierlich zu erhöhen oder zu verringern.

6. Steuerungseinheit (102) gemäß einem der vorangegangenen Ansprüche, wobei die Steuerungseinheit (102) ausgebildet ist, einen zuletzt eingestellten Leistungswert einer Leistungsstufe (211, 212, 213, 214, 215, 216) zu speichern.

## Claims

1. Control unit (102) for controlling an intermediate power level of a vacuum cleaner (100), the control unit (102) being designed to read in an actuation signal (106) over an actuation duration of a button element (104), the control unit (102) being designed to increase or decrease a power level (211, 212, 213, 214, 215, 216) by a predefined value upon detecting an actuation duration of the button element (104) which is shorter than a specified holding time (220),
**characterised in that**
the control unit (102) is designed to set a power level in a range between two predefined values upon detecting the actuation duration of the button element (104) which is longer than a further holding time (222), the control unit (102) being designed to increase or decrease a power level (211, 212, 213, 214, 215, 216) by a predefined value upon detecting the actuation duration of the button element (104) which is longer than an additional holding time (224).

2. Control unit (102) according to claim 1, wherein the specified holding time (220) of the button element (104) corresponds to one second.

3. Control unit (102) according to claim 1, wherein the further holding time (222) lasts longer than one second, but in particular less than two and a half seconds.

4. Control unit (102) according to claim 1, wherein the additional holding time (224) lasts longer than two and a half seconds.

5. Control unit (102) according to any of the preceding claims, wherein the control unit (102) is designed to continuously increase or decrease the vacuum cleaner power to a power corresponding to the actuation duration.

6. Control unit (102) according to any of the preceding claims, wherein the control unit (102) is designed to store a most-recently set power value of a power level (211, 212, 213, 214, 215, 216).

## Revendications

1. Unité de commande (102) pour la commande d'un niveau intermédiaire de puissance d'un aspirateur (100), dans laquelle l'unité de commande (102) est configurée pour lire un signal d'actionnement (106) concernant une durée d'actionnement d'un élément formant bouton (104), dans laquelle l'unité de commande (102) est configurée pour, lors de la détection d'une durée d'actionnement de l'élément formant bouton (104) qui est plus courte qu'un temps de maintien (220) déterminé, augmenter ou diminuer un niveau de puissance (211, 212, 213, 214, 215, 216) d'une valeur prédéfinie,
**caractérisée en ce**
**que** l'unité de commande (102) est configurée pour, lors de la détection de la durée d'actionnement de l'élément formant bouton (104) qui est plus longue qu'un temps de maintien supplémentaire (222), régler un niveau de puissance dans une plage comprise entre deux valeurs prédéfinies, dans laquelle l'unité de commande (102) est configurée pour, lors de la détection de la durée d'actionnement de l'élément formant bouton (104) qui est plus longue qu'un temps de maintien supplémentaire (224), augmenter ou diminuer un niveau de puissance (211, 212, 213, 214, 215, 216) d'une valeur prédéfinie.

2. Unité de commande (102) selon la revendication 1, dans laquelle le temps de maintien (220) déterminé de l'élément formant bouton (104) correspond à une seconde.

3. Unité de commande (102) selon la revendication 1, dans laquelle le temps de maintien supplémentaire (222) dure plus d'une seconde, mais en particulier moins de deux secondes et demie.

4. Unité de commande (102) selon la revendication 1, dans laquelle le temps de maintien supplémentaire (224) dure plus de deux secondes et demie.

5. Unité de commande (102) selon l'une des revendications précédentes, dans laquelle l'unité de commande (102) est configurée pour augmenter ou diminuer en continu la puissance de l'aspirateur jusqu'à une puissance correspondant à la durée d'actionnement.

6. Unité de commande (102) selon l'une des revendications précédentes, dans laquelle l'unité de commande (102) est configurée pour mémoriser une valeur de puissance réglée en dernier d'un niveau de puissance (211, 212, 213, 214, 215, 216).
